# EUROPEAN PATENT SPECIFICATION

(11) **EP 1 544 542 B1**
(45) Date of publication and mention of the grant of the patent: **10.09.2008**
(21) Application number: 03425807.9
(22) Date of filing: 18.12.2003
(51) Int. Cl.: F23D 14/14, F23D 14/74, F23D 14/82

(54) **Cover member for gas combustion heads, and gas burner comprising such a cover member**
Abdeckung eines Brennerkopfes, und Gasbrenner mit einer solchen Abdeckung
Capuchon d'une tête de combustion, et brûleur à gaz comprenant un tel capuchon

(43) Date of publication of application: 22.06.2005
(73) Proprietor: Riello S.p.A., 37045 Legnago (IT)
(72) Inventor: Lovato, Andrea, 37040 Terranegra Legnago (IT); Toniato, Giuseppe, 37045 Legnago (IT)
(74) Representative: Jorio, Paolo

(56) References cited:
- EP-A- 0 635 677
- FR-A- 2 526 919
- US-A- 3 391 983
- US-A- 3 726 633
- US-A- 4 657 506
- US-A- 6 065 963

## Description

The present invention relates to a metal cover member for premix burner gas combustion heads.

The present invention also relates to a gas or vapourized liquid fuel burner comprising such a cover member.

As is known, in premix combustion heads, i.e. in which gas and air are mixed upstream from the combustion region where the flame is generated, the perforated metal combustion head from which the inflammable mixture is emitted can be covered with a specially constructed metal cover member.

Covering the combustion head with a metal cover member is particularly advantageous by enhancing heat exchange by radiation, while at the same time protecting the metal structure of the combustion head underneath. High modulation ratios and high-thermal-power premix applications can thus be achieved, which would otherwise be impossible on account of the severe thermal stress to which the combustion head is subjected.

The metal cover member also prevents the combustion head underneath from overheating to the extent that hazardous backfiring occurs.

Finally, the porosity of the metal cover member over the combustion head improves distribution of the fuel gas/air mixture, while at the same time reducing flame temperature and, hence, nitric oxide emissions.

In premix radiant burners, known solutions employ appropriately shaped woven or sintered cover members fitted to the combustion heads.

In the case of a burner with a cylindrical perforated combustion head, the woven or sintered cover member is folded to fit completely over the cylindrical surface of the combustion head, the free portions of the cover member are welded together, and the cover member so formed is welded to the combustion head.

FR-A-2 526 919 (Osaka) relates to a premix gas burner provided with a flow of primary air only. Furthermore, the lateral cylindrical surface of the burner body comprises a perforated plate, which, in its turn, is covered with a metallic tissue. The metallic tissue is formed by metallic wires.

Furthermore, in EP-A-0 635 677 (Gaz de Fance) a flameholder plate for a gas-mixture burner is described. This plate, which has passages running through it for the circulation through it of the gases, comprises a compressed network of interlaced metal wire(s), forming between them passages for the gases. The plate can be produced by rolling up a band of interlaced wires, by stacking sections of band or by folding this band. Such a plate can in particular be used for being mounted on domestic burners.

Moreover, US-A-3 391 983 (Shinichi Harazono et al.) relates to an infra-red radiating burner. Such a burner comprises a cylindrical heat transmitting element (e.g. crystallized glass such as Pyrex glass, Pyroceram etc.). In the cylindrical heat transmitting element an outer metal net cylinder and an inner metal net cylinder are inserted. Both the outer metal net cylinder and the inner metal net cylinder are manufactured by weaved metal wires.

However, all aforementioned documents relate to metal tissues manufactured by using simple metallic wire(s).

It is an object of the present invention to provide a cover member for gas burners, and a gas or vapourized liquid fuel burner comprising such a cover member, which is improved with respect to currently marketed types.

According to the present invention, there are provided a cover member for gas combustion heads, and a gas burner comprising such a cover member, as claimed in the accompanying independent Claims.

Two non-limiting embodiments of the present invention will be described by way of example with reference to the accompanying drawings, in which:
Figure 1 shows a layout of a premix gas burner featuring an innovative cover member;
Figure 2 shows an enlarged detail of the perforated combustion head of the Figure 1 burner fitted with the cover member which is the main object of the present invention;
Figure 3 shows a number of stitches of a tubular base structure from which the cover member in Figures 1 and 2 is formed;
Figure 4 shows a tubular base structure made using at least one drawn wire and knitted by means of a first knitting operation;
Figure 5 shows a cover member formed by means of a second knitting operation using at least one tubular base structure formed by means of the first knitting operation; the tubular base structure is the one shown in Figures 3 and 4;
Figure 6 shows an enlarged detail of the cover member in Figure 5;
Figure 7 shows a cover member formed by weaving a number of tubular base structures as shown in Figures 3 and 4;
Figure 8 shows an enlarged detail of the cover member in Figure 7.
Number 10 in Figure 1 indicates a premix gas burner featuring an innovative cover member in accordance with the present invention.
Burner 10 comprises a main body 11 supplied with fuel gas or vapourized liquid fuel by a pipe 12. Fuel gas flow along pipe 12 is controlled in the normal way by a pressure regulator 13 connected to main body 11 by a conduit 14.

Pipe 12 terminates with a nozzle 15 at the end projecting inside body 11.

A fan 16, integral with main body 11, provides for feeding into main body 11 the amount of primary air required to burn the gas, or vapourized liquid fuel, supplied by nozzle 15.

A substantially cylindrical, perforated metal combustion head 17 projects from body 11.

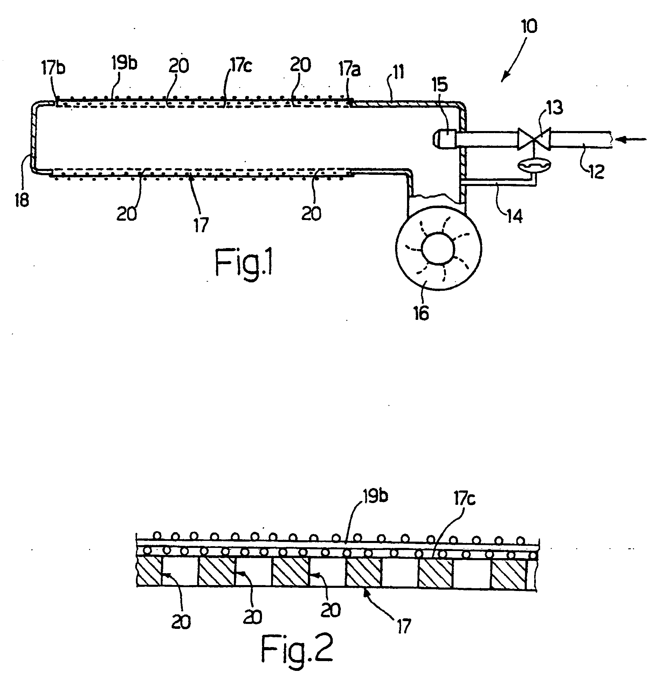

As shown in Figure 1, combustion head 17 is fixed at a first end 17a, as stated, to main body 11, and is closed at a second end 17b by a cap 18.

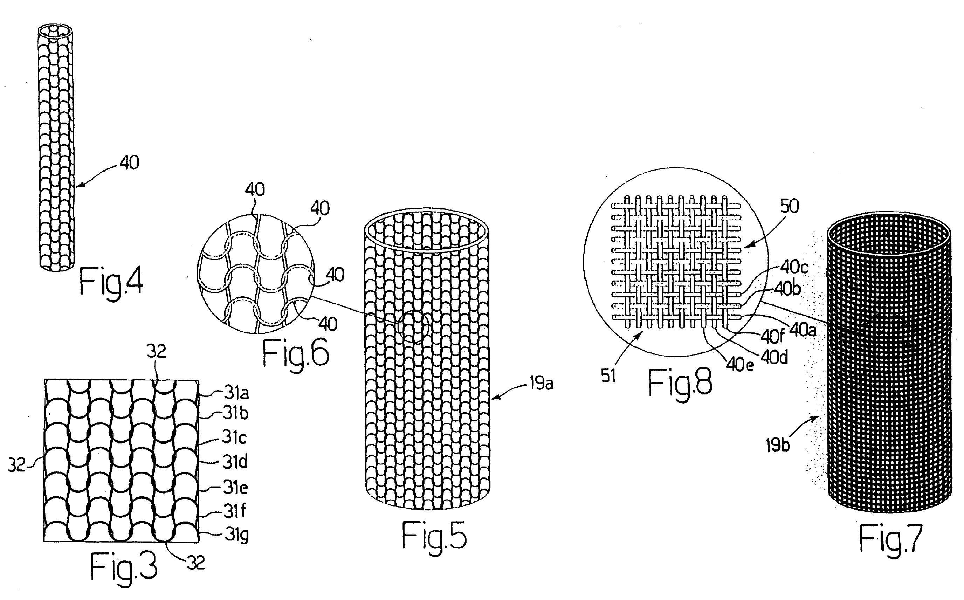

As shown in Figures 1 and 2, the cylindrical outer surface 17c of perforated metal combustion head 17 is covered with a cover member 19b (Figures 7 and 8) in accordance with one embodiment of the present invention.

As shown particularly in Figure 2, combustion head 17 has a number of openings 20 through which the fuel gas/air mixture flows from body 11 and combustion head 17 outwards to where the mixture is ignited to form the flame (not shown). As stated, the outer surface 17c (Figures 1, 2) of combustion head 17 is fitted with cover member 19b.

With reference to Figures 5 and 7, the cover member 19a (Figure 5), 19b (Figure 7) is formed by interlacing at least one tubular base structure 40 shown by way of example in Figure 4.

Figure 3 shows a number of stitches 31a-31g of a tubular base structure 40 (Figure 4). Stitches 31a-31g are formed by knitting, by means of a first knitting operation, at least one metal wire 32 on a known knitting machine (not shown).

More specifically, as shown in Figure 3, wire 32 is knitted using a knitting method commonly used, for example, in the manufacture of hosiery.

This method produces a tubular base structure 40, as shown in Figure 4, in which stitches 31a-31g are looped using a method also commonly used in the knitting industry, and particularly in the manufacture of nylon stockings.

Advantageously, though not necessarily, the tubular base structure in Figure 4 has a diameter of about 0.5 mm to 4 mm, and may be compressed to facilitate subsequent processing.

Advantageously, though not necessarily, wire 32 from which stitches 31a-31g are formed has a diameter of 0.05 mm to 1 mm.

Wire 32 is normally formed by drawing alloys resistant to high temperature and corrosion, such as NiCr or FeCrAl.

The tubular base structure 40 (Figure 4) described is much lighter than stranded wire (not shown) used in conventional cover members (not shown). A stranded wire, in fact, is formed by combining a number of wires or fibres, and gives rise to a solid, heavy structure.

The tubular base structure 40 in Figure 4, on the other hand, is characterized by being lightweight and extremely porous.

The porosity of cover member 19a (Figure 5), 19b (Figure 7) is a fundamental parameter in combustion applications.

Porosity, in fact, affects nitric oxide emission values, and reduces the load losses of combustion head 17; and adequate porosity of cover member 19a, 19b also aids in preventing backfiring.

The light weight of cover member 19a, 19b reduces thermal inertia, which is an important factor in reducing the heating time of the burner at start-up. In fact, the shorter the heating time is, the more stable the flame will be. Also, when the burner is turned off, faster cooling reduces thermal stress of combustion head 17, thus reducing wear. The light weight of cover member 19a, 19b also means less material is required.

The number of needles (not shown) used to produce tubular base structure 40 (Figure 4) determines to some extent the elasticity and porosity of the finished article.

The same knitting method used to produce tubular base structure 40 may also be used to produce cover member 19a in Figures 5, 6.

In actual fact, the cover member 19a in Figure 5, which represents a first embodiment of the present invention, is formed by means of a second knitting operation using at least one tubular base structure 40 formed using the first knitting operation described with reference to Figures 3 and 4.

Performing a second knitting operation using at least one tubular base structure 40 advantageously produces a tubular cover member 19a as shown in Figure 5, and which can be fitted directly onto the combustion head. In this case, no welding is required to loop cover member 19a, thus simplifying manufacture and use of cover member 19a.

In the second knitting operation, it is essential to control the overall elasticity of cover member 19a and form a type of knit which, once fitted on, permits thermal expansion of combustion head 17 during operation of burner 10.

Once fitted on, cover member 19a adheres to combustion head 17.

Though the solution proposed is particularly suitable for cylindrical combustion heads 17, this does not exclude the possibility of using cover member 19a on combustion heads of other shapes or on flat structures.

When producing cover member 19a, it is important to avoid ladders which, in service, are particularly hazardous by giving rise to backfiring. Ladders may be avoided by using special knit configurations known in literature.

The type of knit also determines the porosity of the final structure.

In a second embodiment of the present invention shown in Figures 7 and 8, as opposed to the second knitting operation described with reference to Figures 5 and 6, tubular base structures 40 in Figure 4 can be assembled by straightforward weaving on a frame (not shown), and the finished article may be flat or tubular, depending on the type of loom used.

One example of a cover member 19b of this type is shown in Figures 7 and 8. The Figure 8 detail shows the weft 50 and warp 51 configuration typical of a cover member 19b woven on a loom (not shown).

More specifically, the weft 50 is defined by a number of tubular base structures 40a, 40b, 40c, and the warp 51 by tubular base structures 40d, 40e, 40f; and weft 50 and warp 51 are woven on a frame (not shown).

Tubular base structures 40a-40f are all formed as described with reference to Figures 3 and 4.

The elasticity achieved by weaving as in Figures 7 and 8 is also ensured by the elasticity of tubular base structures 40a-40f.

Unlike cover member 19a in the first embodiment, however, cover member 19b in the second embodiment poses no danger of laddering.

Various types of weave can be used to obtain the desired porosity.

Both the intrinsic characteristics of combustion head 17 and knitting or weaving cover member 19a or 19b provide for achieving the porosity and elasticity of cover member 19a, 19b required when applied to premix burners 10.

More specifically, the porosity of cover member 19a, 19b provides for generating the flame front inside and downstream from cover member 19a, 19b (in the flow direction of the premixed mixture), thus averting any danger of backfiring.

The elasticity of cover member 19a, 19b enables it to be fitted on cold, and permits in-service thermal expansion of the supporting combustion head 17.

Another advantage, as stated, of the cover member 19a, 19b proposed is that it can be fitted onto perforated combustion head 17 and used with no need for welding to loop it, thus simplifying production and use of the cover member.

Moreover, once fitted on, cover member 19a, 19b generally adheres to perforated combustion head 17. In some applications, however, it may prove useful to weld it to combustion head 17.

Advantageously, though not necessarily, the single wire 32 (Figure 3) used to form tubular base structure 40 may be made of high-temperature-resistant alloy, such as NiCr or FeCrAl.

## Claims

1. A cover member (19a, 19b) for a premix gas or vapourized liquid fuel burner (11);
said cover member (19a) being **characterized by** the fact it is formed by means of a second knitting, or weaving, operation using at least one tubular base structure (40) formed, in its turn, by means of a first knitting operation of at least one metal wire (32).

2. A cover member (19a, 19b) as claimed in Claim 1, **characterized by** being in the form of a seamless stocking.

3. A cover member (19a, 19b) as claimed in any one of the foregoing Claims, **characterized in that** said tubular base structure (40) has a diameter of 0.5 mm to 4 mm.

4. A cover member (19a, 19b) as claimed in Claim 3, **characterized in that** said tubular base structure (40) is formed using at least one wire (32) of 0.05 mm to 1 mm in diameter.

5. A cover member (19a, 19b) as claimed in Claim 4, **characterized in that** said wire (32) is formed by drawing high-temperature-resistant materials, such as NiCr or FeCrAl alloys.

6. A premix gas or vapourized liquid fuel burner (10),
wherein said burner (11) comprises:
- a main body (11);
- fan means (16) for feeding the amount of primary air required to burn the gas, or the vapourized liquid fuel, into said main body (11);
- supplying means (12, 13, 14) for feeding said main body (11) with gas, or vapourized liquid fuel; and
- a cover member (19a, 19b) associated to said main body (11);
**characterized by** comprising at least one cover member (19a, 19b) as claimed in any one of the foregoing Claims.

## Patentansprüche

1. Abdeckelement (19a, 19b) für einen Vormischbrenner (11) für Gas oder verdampften Flüssigbrennstoff;
wobei das Abdeckelement (19a) durch die Tatsache **gekennzeichnet** ist, dass es mittels eines zweiten Wirk- oder Webvorgangs unter Verwendung von mindestens einer röhrenförmigen Basisstruktur (40) gebildet ist, die ihrerseits mittels eines ersten Wirkvorgangs von mindestens einem Metalldraht (32) gebildet ist.

2. Abdeckelement (19a, 19b) nach Anspruch 1, **dadurch gekennzeichnet, dass** es in der Form eines nahtlosen Strumpfs vorliegt.

3. Abdeckelement (19a, 19b) nach einem der vorangehenden Ansprüche, **dadurch gekennzeichnet, dass** die röhrenförmige Basisstruktur (40) einen Durchmesser von 0,5 mm bis 4 mm aufweist.

4. Abdeckelement (19a, 19b) nach Anspruch 3, **dadurch gekennzeichnet, dass** die röhrenförmige Basisstruktur (40) unter Verwendung von mindestens einem Draht (32) von 0,05 mm bis 1 mm im Durchmesser gebildet ist.

5. Abdeckelement (19a, 19b) nach Anspruch 4, **dadurch gekennzeichnet, dass** der Draht (32) durch Ziehen von hitzebeständigen Materialien, wie z.B. NiCr- oder FeCrAl-Legierungen, gebildet ist.

6. Vormischbrenner (10) für Gas oder verdampften Flüssigbrennstoff,
wobei der Brenner (11) umfasst:
- einen Hauptkörper (11);
- eine Gebläseeinrichtung (16) zur Einspeisung der Menge von primärer Luft in den Hauptkörper (11), die erforderlich ist, um das Gas oder den verdampften Flüssigbrennstoff zu verbrennen;
- Versorgungseinrichtungen (12, 13, 14) zur Versorgung des Hauptkörpers (11) mit Gas oder verdampftem Flüssigbrennstoff; und
- ein Abdeckelement (19a, 19b), das mit dem Hauptkörper (11) in Verbindung steht;
**dadurch gekennzeichnet, dass** er mindestens ein Abdeckelement (19a, 19b) nach einem der vorangehenden Ansprüche umfasst.

## Revendications

1. Un capuchon (19a, 19b) pour brûleur (11) à prémélange de gaz ou carburant liquide vaporisé ;
dans lequel ledit brûleur (11) comprend:
- un corps principal (11) ;
- des moyens de ventilation (16) pour introduire la quantité d'air primaire nécessaire pour brûler le gaz ou le carburant liquide vaporisé dans ledit corps principal (11) ;
- des moyens d'alimentation (12, 13, 14) pour alimenter ledit corps principal (11) en gaz ou en carburant liquide vaporisé; et
- un capuchon (19a, 19b) associé audit corps principal (11) ;
ledit capuchon (19a) étant **caractérisé par le fait qu'**il est formé au cours d'une deuxième opération de tricotage ou tissage utilisant au moins une structure à base tubulaire (40) formée, à son tour, au cours d'une première opération de tricotage d'au moins un fil métallique (32).

2. Un capuchon (19a, 19b) selon la revendication 1, **caractérisé en ce qu'**il présente la forme d'un bas sans couture.

3. Un capuchon (19a, 19b) selon l'une quelconque des revendications précédentes, **caractérisé en ce que** la structure à base tubulaire (40) a un diamètre allant de 0,5 mm à 4 mm.

4. Un capuchon (19a, 19b) selon la revendication 3, **caractérisé en ce que** ladite structure à base tubulaire (40) est formée en utilisant au moins un fil (32) de 0,05 mm à 1 mm de diamètre.

5. Un capuchon (19a, 19b) selon la revendication 4, **caractérisé en ce que** ledit fil (32) est formé en étirant des matériaux résistant à de hautes températures, tels que les alliages NiCr ou FeCrAl.

6. Un brûleur (11) à prémélange de gaz ou carburant liquide vaporisé,
dans lequel ledit brûler (11) comprend :
- un corps principal (11);
- des moyens de ventilation (16) pour introduire la quantité d'air primaire nécessaire pour brûleur le gaz ou le carburant liquide vaporisé dans ledit corps principal (11) ;
- des moyens d'alimentation (12, 13, 14) pour alimenter ledit corps principal (11) en gaz ou en carburant liquide vaporisé ; et
- un capuchon (19a, 19b) associé audit corps principal (11) ;
**caractérisé en ce qu'**il comprend au moins un capuchon (19a, 19b) selon l'une quelconque des revendications précédentes.
